# EUROPEAN PATENT SPECIFICATION

(11) **EP 4 083 442 B1**
(45) Date of publication and mention of the grant of the patent: **23.04.2025**
(21) Application number: 21171647.7
(22) Date of filing: 30.04.2021
(51) Int. Cl.: F15B 5/00, F15B 13/04, F15B 13/044, F16K 31/02, F16K 41/10, F16K 99/00, F15B 13/00

(54) **A SYSTEM OF VALVE POSITIONERS WITH PNEUMATIC OUTPUT**
SYSTEM VON VENTILPOSITIONIERERN MIT PNEUMATISCHEM AUSGANG
SYTÈME DE POSITIONNEURS DE VANNE À SORTIE PNEUMATIQUE

(43) Date of publication of application: 02.11.2022
(73) Proprietor: ABB Schweiz AG, 5400 Baden (CH)
(72) Inventor: BREISCH, Sebastian, 69239 Neckarsteinach (DE); TUEYSUEZ, Arda, 64295 Darmstadt (DE); FRANTISEK, Ondrej, 68542 Heddesheim (DE)
(74) Representative: Maiwald GmbH

(56) References cited:
- EP-A2- 1 524 437
- WO-A1-2008/083325
- WO-A1-2014/083493
- WO-A1-2018/033239
- US-A1- 2016 230 904
- US-A1- 2019 032 800
- US-B2- 9 695 951

## Description

### Background

Today more than 60% of all actuators for the process industry are based on pneumatics, which require a positioner to control the position of the actuator. To operate such positioner a "main stage" of the positioner is driven by a "pilot stage". The main stage is a unit that operates the actuator operating the process valve at the required pneumatic operation pressure, as e.g. 10 bar. The standard approach is to design the system, including the positioner, the actuator and the process valve such that an operating point of the main stage is close to a balance of forces, leading small changes on a control pressure to provide the desired tripping of the valve. Positioners in general must comply with stringent requirements on low energy consumption. The unit that controls the control pressure, the "pilot stage", represents the controllable part of the system. A pressure to run the pilot stage is a fraction of the pneumatic operation pressure of the actuator and is provided by a pressure reducer.

US 9,695,951 B2 relates to a slide valve comprising a bushing in which fluid openings are provided which extend through the wall of bushing, a slide which is arranged adjustably in the bushing and is provided with at least one fluid duct, and an electroactive polymer actuator which can adjust the slide in the bushing. WO 2018/033239 A1 relates to a fluidic actuator having at least one membrane consisting of an electroactive polymer or a dielectric elastomer, such as a valve, having an actuator device, having means for adjusting and detecting an elongation of the membrane and to a method for operating such a fluidic actuator. US2016/0230904 A1 relates to a fluid control systems employing compliant electroactive materials. It relates to valves constructed of transducers made of compliant electroactive materials.

A pneumatic positioner, respectively a system including valve positioners with pneumatic output, faces two contrary business demands. On the one hand, there is a demand for high pneumatic pressure to operate the actuator; on the other hand, there are stringent requirements for a low power consumption of the overall system. For this, a conventional positioner includes several submodules. These submodules can be seen as force amplifiers. However, this state-of-the-art arrangement leads to a complex and bulky setup. In order to operate high pneumatic pressures with low, particularly electrical, power, a close to equilibrium topology is applied, in which the forces by the pneumatic pressure are balanced by e.g. compensation springs. Thus, only a small force, and correspondingly energy, is sufficient to control a position of the process valve.

This small amount of "controlled force" is conventionally also based on pneumatic pressure. Therefore, a "pressure reducer" is used, which reduces the total pneumatic pressure partly to provide low-pressure to a subsystem, which is configured to be controlled with low electrical power. This "low-pressure-subsystem", is the "pilot stage". Using other words, the pilot stage acts as a force amplifier, controlling a larger force of a pneumatic pressure by a smaller controlled force. The usage of pilot stages in general is inefficient and cost intensive. Former power requirements have led to the design of a balanced main stage and a controllable sub-unit (pilot stage) that is to control a fraction of the pneumatic pressure.

State of the art valve positioner with pneumatic output systems are operated using such a pilot stage, which can be configured in different ways and are based on different technologies, as e.g. based on a piezo-nozzle or a flapper-nozzle. The usage of pilot stages in general leads to a bulky design and is cost intensive. A further problem using pilot stage designs for positioners is a constant blow-off of the pneumatic medium, which results in inefficiency.

Aspects of the present invention are related to a system of valve positioners with pneumatic output and a use of a system of valve positioners with pneumatic output as described in the independent claims.

Advantageous modifications of the invention are stated in the dependent claims. A dielectric elastomer actuator in membrane topology can be named "membrane actuator".

To achieve these and other advantages and in accordance with the purpose of the invention, as embodied and broadly described herein, there is provided a system of valve positioners with pneumatic output according to claim 1.

A system of valve positioners with pneumatic output can be a device which is configured to control a pneumatic actuator.

The plurality of valve positioners with pneumatic output of the system of valve positioners with pneumatic output is configured to control a pneumatic actuator.

The pneumatic actuator can be mechanically coupled to a process valve to control the process valve.

Aspects of the present invention are related to a dielectric elastomer actuator in membrane topology, in the following named "membrane actuator" for controlling a valve positioner with pneumatic output a system of valve positioners with pneumatic output, and a use of a positioner drive.

The membrane actuator is configured to be mechanically coupled to a valve of the valve positioner with pneumatic output for controlling the pneumatic positioner.

The membrane actuator is configured to be controlled by electrical voltages and/or the membrane actuator is can be configured to be coupled to the valve of the pneumatic positioner by a central part of the membrane actuator.

Using other words, by using such a positioner drive units of a main stage of the system of valve positioners with pneumatic output, are driven and operated directly by the positioner drive to make a pilot stage and/or a pressure reducer obsolete to save energy and/or to have a less bulky system of valve positioners with pneumatic output. That means the system of valve positioners can be designed to have a reduced design space, as compared to systems of valve positioners with pneumatic output as is state-of-the-art.

This direct actuation by a positioner drive, not using pneumatic pressure to operate units of the main stage, can be controlled by electrical signals and/or electrical power provided to the positioner drive.

Advantageously the pneumatic positioner, which is mechanically coupled to a positioner drive can provide a robust system, because it can be built by a less complex mechanical construction. In addition, such pneumatic positioners can be configured to be more robust towards temperature changes and external vibrations than a pneumatic pilot stage and by this they can be adapted to a plurality of production environments. To drive the pneumatic positioners directly reduces the requirements in respect to a quality of the air of the overall pneumatic system, because they are less sensitive to particles distributed by the air, which may get stuck within, e.g., a pneumatic pilot stage.

A discret operation of the individual valves of the pneumatic positioners by the corresponding positioner drives can improve the performance of the valve positioner with pneumatic output system. Because there is no steady state air flow necessary for a pilot stage this steady-state air consumption is eliminated.

Advantageously only minor changes have to be designed to modify existing positioner drives to include the membrane actuator, thereby existing designs, which can be configured for high flow rates and high pressures with a customer proven technology, can be used, as key valve components, for the proposed positioner drives, which include the membrane actuator.

According to an aspect, the membrane actuator can be configured to be mechanically coupled directly to a plunger of the valve of the pneumatic positioner.

This direct mechanically coupling with the plunger of the valve enables to set up a simple system using such valve positioner with pneumatic output including a positioner drive, which can be driven directly by electrical signals provided to the membrane actuator.

According to the invention, the membrane actuator is configured to seal a pneumatic compartment of the pneumatic positioner.

Advantageously the membrane actuator includes the functionality of controlling the respective pneumatic positioner as well as sealing the pneumatic positioner.

That means pneumatic positioners or valve positioner with pneumatic output units of a main stage can be operated directly by the membrane actuator by having a functional integration of a sealing and actuation.

According to the invention, the membrane actuator comprises a dielectric-elastomer membrane; and at least one electrical electrode adjacent to the dielectric-elastomer membrane to control the membrane actuator based on an electrical voltage provided to the electrical electrode.

Dielectric Elastomer Actuators (DEA) are members of the group of "nonconventional actuators", which are based on smart materials. Advantageously dielectric elastomer actuators have a proven track record in various applications and can be adapted for the described purpose as described. The anticipated solution is to use a DEA in membrane topology, which allows for a functional integration of both pressure sealing, mechanical guiding and actuation.

DEAs include elastic membranes, as e.g. silicon, with an electrode on each side for providing an electrical field. The topology can be seen analogue to a conventional capacitor, but with an elastic dielectric material in between the electrodes. When the electrical field is activated, electric forces compress the elastic dielectric material and thereby stretches the membrane actuator. Using the membrane actuator topology the membrane can be elongate as a result of the electric field and allow for an out of plane motion of the membrane actuator, which can drive the direct operation of a main stage valve, which is included within the pneumatic positioner.

That means pneumatic positioners or valve positioner with pneumatic output units of a main stage can be operated directly by Dielectric Elastomer Actuators (DEA) in "membrane topology", ideally by having a functional integration of sealing and actuation by DEAs.

According to an aspect, the membrane actuator comprises an electrical counter electrode adjacent to the dielectric-elastomer membrane at the opposite side of the dielectric-elastomer membrane as the electrical electrode for generating an electrical field between the electrodes if an electrical voltage is provided to the electrodes.

According to an aspect, the membrane actuator includes: a first electrical contact electrically coupled to the electrical electrode; and a second electrical electrode with a second electrical contact; for provision of electrical voltages to operate the membrane actuator.

According to an aspect, the membrane actuator is configured to be arranged within a housing of the pneumatic positioner.

Building of a pneumatic positioner, wherein the positioner drive is inside of the housing of the valve positioner with pneumatic output enables a compact design of the pneumatic positioner.

According to an aspect, the membrane actuator is configured to be mechanically coupled to a housing of the pneumatic positioner for controlling the pneumatic positioner.

A peripheral part of the membrane actuator can be coupled to the housing of the pneumatic positioner for enabling the out of the plane movement of the membrane actuator to move the valve of the pneumatic positioner.

According to the invention, the dielectric-elastomer membrane is configured to seal an inner pneumatic compartment of the pneumatic positioners against an outer environment of the pneumatic positioner in respect to a pneumatic fluid within the pneumatic compartment.

According to an aspect, the positioner drive includes a compensation element for compensation of forces originated from pneumatic pressure within the respective pneumatic positioner, wherein the compensation element is configured to provide a negative rate force-displacement relationship.

A negative rate force-displacement relationship means that, if the compensation element provides a force to balance forces originated from pneumatic pressure acting on the valve at a balanced and/or rest position of the valve, as for instance a closed position, and the valve has to be opened, then the additional displacement of the valve or the mechanically coupled compensation element will not further increase the necessary force for the displacement of the compensation element, but the force to further displace the compensation element will be reduced. That means the compensation element can be configured such that a forced displacement gradient is negative.

According to an aspect, the compensation element comprises a system of compression springs, which is configured to provide the negative rate force-displacement relationship and/or a convex disc spring, which is configured to provide the negative rate force-displacement relationship and/or a permanent magnet system, which is configured to provide the negative rate force-displacement relationship.

The compensation element based on a system of compression springs can include two compression springs, which are mechanically coupled with each other at one site of each spring at a coupling point and wherein each other end of each spring can be mechanically coupled to a rigid means, as for instance a housing of the pneumatic positioner. Based on the described mechanically coupling of the two springs the compensation element is configured to provide the negative rate force-displacement relationship. The coupling point of the system of compression springs can be mechanically coupled, e.g., to a valve of the pneumatic positioner to compensate forces originated from pneumatic pressure within the pneumatic positioner acting on the valve.

According to the invention, the plurality of pneumatic positioners and the plurality of membrane positioner drives of the valve positioner with pneumatic output system are configured to provide the functionality of a 4/3 positioner valve system.

Pneumatic positioners, respectively systems of valve positioners with pneumatic output, including "4/3 valve functionality" are a demand from the industry. This term means a system of valve positioners with pneumatic output including "4" pneumatic ports: a pressure inlet; a first and a second output port; and a ventilation port including "3" possible operation modes: forward; backward; and blocked movement of the pneumatic actuator. In general, different main stage topologies for the system of valve positioners with pneumatic output exist to allow for a 4/3 valve functionality, e.g. four parallel on/off valves, spool valves, etc. That means using the pneumatic positioner as described for building the system of valve positioners with pneumatic output with 4/3 functionality provides advantagesly a modular setup for a required functionality and an assembly of the system of valve positioner with pneumatic output.

Each of the pneumatic positioners of the system of valve positioners with pneumatic output is operated directly by a positioner drive as described.

An actuation of the positioner drive can additionally be based on different physical principals like pneumatics, hydraulics, electricity, etc., what is not claimed.

A use of a system of valve positioners with pneumatic output as described above is proposed, for controlling a process valve.

### Brief description of the drawings

The accompanying drawings, which are included to provide a further understanding of the invention and are incorporated in and constitute a part of this application, illustrate embodiments of the invention and together with the description serve to explain the principle of the invention. The drawings display:
- Figure 1: a system for controlling a process valve;
- Figure 2a: a state-of-the-art valve positioner with pneumatic output including sealing membranes;
- Figure 2b: a schematic sketching a state-of-the-art balanced valve design;
- Figure 3a: a valve positioner with pneumatic output with a positioner drive not according to the claimed invention;
- Figure 3b: a valve positioner with pneumatic output including an electromagnetic positioner drive for use in the claimed invention;
- Figure 4: a valve positioner with pneumatic output including membrane positioner drives for use in the claimed invention;
- Figure 5a, b: schematic drawings of a membrane positioner drive for use in the claimed invention;
- Figure 6a-c: compensation elements;
- Figure 7a: schematic sketches of a 3/3 direction positioner valve not according to the claimed invention;
- Figure 7b: schematic sketches of a block diagram of 3/3 direction positioner valve not according to the claimed invention;
- Figure 8a: schematic sketches of a 4/3 direction positioner valve;
- Figure 8b: schematic sketches of a block diagram of 4/3 direction positioner valve;

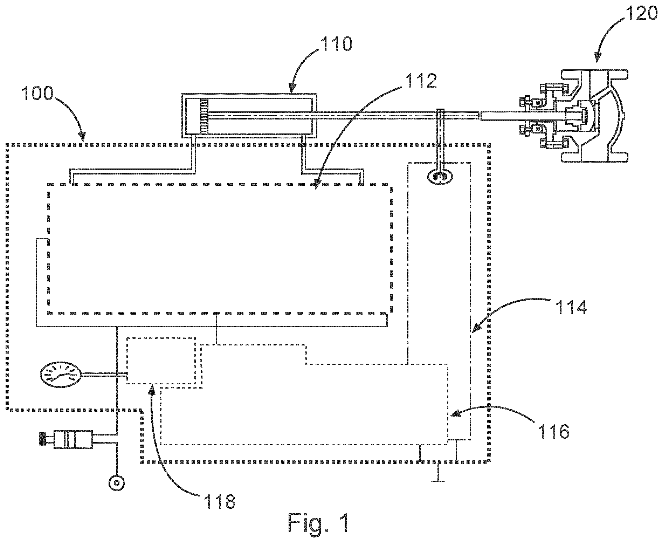

Figure 1 sketches schematically an overall topology of a system to control a process valve 120 according to the state of the art, which is operated by a pneumatic actuator 110 to control a position of the pneumatic actuator 110, and wherein the pneumatic actuator 110 is controlled by a system including valve positioners with pneumatic output 100. For operation of such a system of valve positioners with pneumatic output 100 it includes a "main stage" 112 and a "pilot stage" 116.

The main stage 112 is configured to operate the pneumatic actuator 110, which is coupled to the process valve 120 at a required pneumatic operation pressure, as e.g. 10 bars. The main stage 112 can be configured to have one operating point close to a force balance, such that only small changes using a control pressure can lead to the desired tripping of the process valve 120. The main stage 112, respectively valve positioners of the main stage 112, can include components to provide the close-to-force-balance operation to enable the force balance.

This small amount of "controlled force" is conventionally as well based on pneumatic pressure. Therefore, a "pressure reducer" 118 is used, which reduces the total pneumatic pressure partly to a low-pressure subsystem, which can then be controlled with low electrical power. The reduced pressure for operating the pilot stage 116 is a fraction of the pneumatic operation pressure and adjusted by the pressure reducer 118.

The pilot stage 116 represents a "low-pressure-subsystem" of the system including valve positioners with pneumatic output 100 and is configured to control the control pressure, which can be controlled by electrical signals generated by electronics 114. Using other words, the pilot stage 116 acts as a force amplifier, controlling a larger force of a pneumatic pressure by a smaller controlled force. Typically, systems of valve positioners with pneumatic output 100 are operated via a pilot stage 116, which can be realized in different ways and by using different technologies, as e.g. using a piezo- or a flapper-nozzle.

In general, a valve positioner with pneumatic output 100, respectively a system of valve positioners with pneumatic output 100, faces two contrary demands for industrial production:
On the one hand, there is a demand for high pneumatic pressure to operate; on the other hand, there are stringent requirements for a low power consumption.

To realize this, a conventional system of valve positioners with pneumatic output 100 as shown in figure 1 comprises several submodules, respectively valve positioners with pneumatic output. These submodules can be seen as force amplifiers. However, this state-of-the-art arrangement leads to a complex and bulky assembly.

As mentioned before, in order to operate high pneumatic pressures with low electrical power, a close to equilibrium topology of the submodules is typically designed, in which the forces originated by the pneumatic pressure are balanced by, e.g., counter springs. By this, only a small force and corresponding energy can be sufficient to change a position of the process valve 120.

The usage of a pilot stage 116 in general leads to a bulky assembly of a system of valve positioners with pneumatic output 100 and is cost intensive. A further disadvantage of using a pilot stage116 is that a constant blow-off of the pneumatic medium is required, which makes the system inefficient.

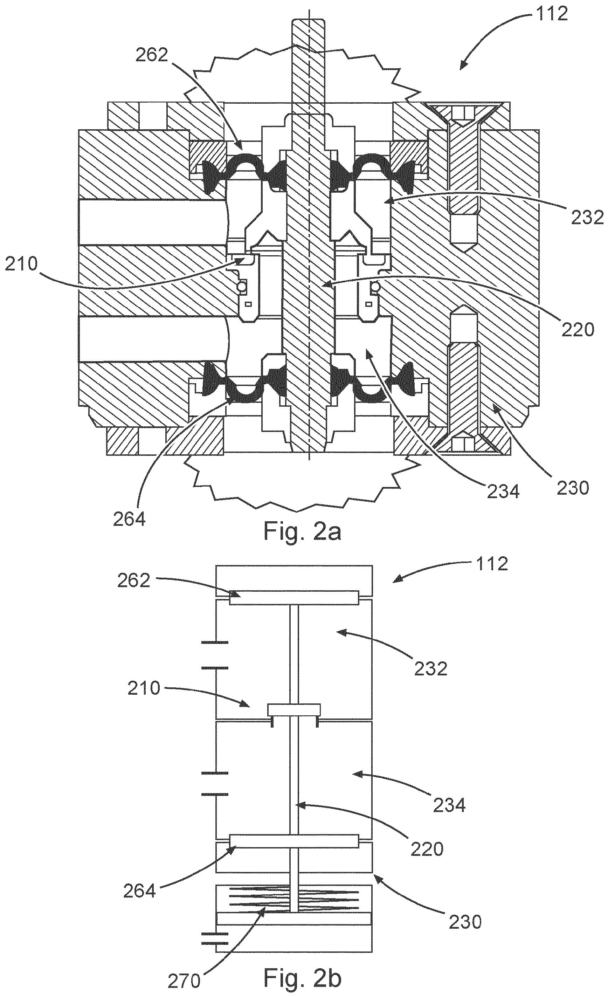

Figure 2a sketches a state-of-the-art valve positioner with pneumatic output of a main stage 112, that means a part of the main stage 112, including a valve 210 a plunger of the valve 220 mechanically coupled to the valve 210, the first valve compartment 232 and a second valve compartment 234, which can be pneumatically coupled by the valve 210 and a first sealing diaphragm 262, which seals the first compartment 262 in respect to an outside of the valve positioner with pneumatic output as well as a second sealing diaphragm 264, configured to seal the second compartment of the valve positioner with pneumatic output to the outside of the valve positioner with pneumatic output. The first and the second sealing diaphragms 262, 264 are mounted in a housing of the valve positioner with pneumatic output and are coupled to the plunger 220 of the valve.

Figure 2b sketches schematically the state of the art valve positioner with pneumatic output of the main stage 112 as described with figure 2a, where the reference signs are corresponding to the description of the figure 2a, to explain the functionality of a compensation element 270 of a state of the art balanced valve design, wherein the compensation element 270 is coupled to the plunger 220 of the valve to compensate forces acting on the valve 210 based on a pressure of the pneumatic fluid within the first chamber 232 of the valve positioner with pneumatic output unit and/or the second chamber 234. Using other words, the compensation element 270 is configured and arranged to reduce the force necessary to open and/or close the valve 210.

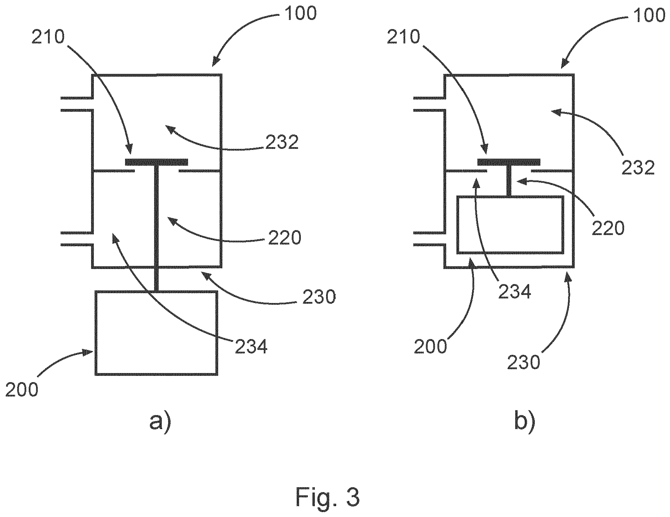

Figure 3a sketches schematically a positioner drive 200 not according to the claimed invention for controlling a valve positioner with pneumatic output 100, respectively a unit of a valve positioner with pneumatic output 100, wherein the positioner drive 200 is configured to be mechanically coupled to a valve 210 of the valve positioner with pneumatic output 100 for controlling the valve positioner with pneumatic output 100. The positioner drive 200 can be configured to be mechanically coupled directly to a plunger 220 of the valve 210 of the valve positioner with pneumatic output 100. The positioner drive 200 as shown in figure 3a is configured to be arranged outside of a housing 230 of the valve positioner with pneumatic output 100.

The valve positioner with pneumatic output 100 with the positioner drive 200 as shown in figure 3b, for use in the claimed invention corresponds to the valve positioner with pneumatic output 100 as shown in figure 2a, but this positioner drive 100 is configured and arranged inside of the housing 230 of the valve positioner with pneumatic output 100.

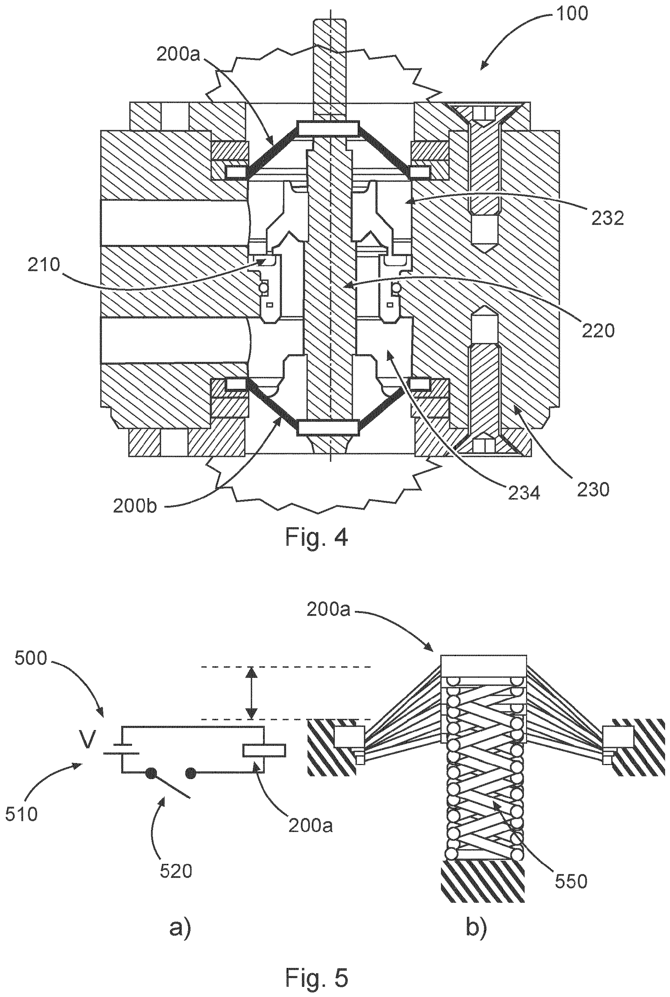

Figure 4 sketches a valve positioner with pneumatic output 100, respectively a unit of a valve positioner with pneumatic output100, including a first positioner drive 200a, which is configured as a membrane positioner drive 200a, wherein the membrane positioner drive 200a includes a dielectric-elastomer membrane drive. The first positioner drive 200a is coupled to a plunger 220 of the valve of the valve positioner with pneumatic output 100 to control the valve 210 of the valve positioner with pneumatic output 100.

The valve positioner with pneumatic output 100 can include a second positioner drive 200b, which is configured as a membrane positioner drive 200b, wherein the membrane positioner drive 200b can include a dielectric-elastomer membrane drive. The second positioner drive 200b is coupled to the plunger 220 of the valve of the valve positioner with pneumatic output 100 to control the valve 210 of the valve positioner with pneumatic output 100.

Each of the dielectric-elastomer membrane drives 200a, 200b can be electrically coupled by electrical coupling means for providing electrical signals to the dielectric-elastomer membrane drives 200a, 200b for operating, wherein the electrical coupling means are not shown in figure 4.

The membrane positioner drives 200a, 200b as described above can be configured and arranged to integrate a functionality of a positioner drive as well as a sealing membrane.

Figure 5a, b sketches schematic drawings of a membrane positioner drive 200a including a dielectric-elastomer membrane. Figure 5a sketches a system 500 of a voltage source 510 which is configured using a switch 520 to be connected to the dielectric-elastomer membrane drive 200a, such that the dielectric elastomer membrane drive 200a will deflect upwards because of the electric field and by this can control, e.g., a valve 210 of a valve positioner with pneumatic output 100.

Figure 5b sketches a dielectric-elastomer membrane drive 200a coupled to a spring 550, wherein the dielectric-elastomer membrane drive 200a is controlled by different voltages to move the spring 550, which is coupled to the dielectric-elastomer membrane drive 200a because of the related forces the dielectric-elastomer membrane drive 200a applies to the spring 550.

The dielectric-elastomer membrane drive 200a can be coupled at a perimeter of the dielectric-elastomer membrane drive to a housing of the valve positioner with pneumatic output 100 as indicated in figure 5b.

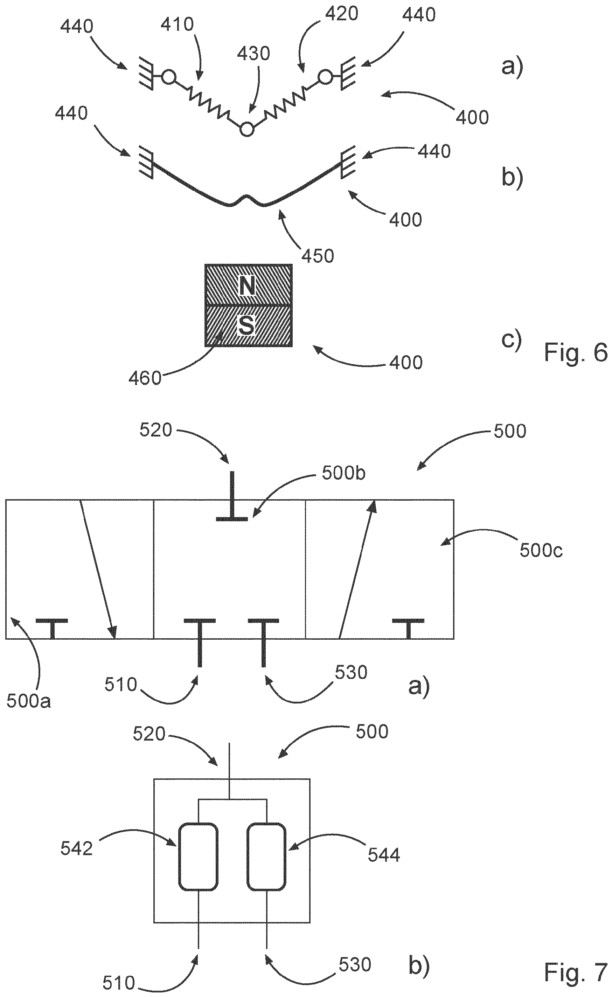

Figures 6a to 6c sketches schematically different embodiments of compensation elements 400 of a valve positioner with pneumatic output 100 for compensation of forces originated from pneumatic pressure within the valve positioner with pneumatic output 100 acting on the valve 210, wherein each of the compensation elements 400 is configured to provide a negative rate force-displacement relationship.

The compensation element 400 of figure 6a comprises a system of compression springs 410, 420, which are mechanically coupled with each other at one site of each spring 410, 420 at a coupling point 430 and wherein each other end of each spring 410, 420 can be mechanically coupled to a rigid means 440, as for instance a housing of the valve positioner with pneumatic output 100. Based on the described mechanically coupling of the two springs 410, 420 the compensation element 400 of figure 6a is configured to provide the negative rate force-displacement relationship. The coupling point 430 can be mechanically coupled, e.g., to the valve 210 of the valve positioner 100 to compensate forces originated from pneumatic pressure within the valve positioner with pneumatic output 100 acting on the valve 210.

The compensation element 400 as sketched within figure 6b comprises a convex disc spring 450, wherein both end points, respectively parts or the whole perimeter, of the convex disc spring can be mechanically coupled to a rigid means 440, as for instance a housing of the valve positioner with pneumatic output 100. Based on the described mechanically coupling of the convex disc spring 450 the compensation element 400 of figure 6b is configured to provide the negative rate force-displacement relationship. A central coupling point 452 can be mechanically coupled, e.g., to the valve 210 of the valve positioner with pneumatic output 100 to compensate forces originated from pneumatic pressure within the valve positioner with pneumatic output 100 acting on the valve 210.

A third embodiment of the compensation element 400 figure 6c includes a permanent magnet system 460, which is configured to provide the negative rate force-displacement relationship. A permanent magnet of the permanent magnet system 460 can be mechanically coupled to a rigid means, as for instance the housing 230 of the valve positioner with pneumatic output 100 and this permanent magnet can be arranged and configured to couple to the valve 210 of the valve positioner with pneumatic output 100 by magnetic forces. For this, the valve 210 and/or the plunger 220 of the valve 210 can include a ferromagnetic part and/or another permanent magnet for the magnetic coupling. Because the magnetic coupling of permanent magnets and/or permanent magnets with ferromagnetic material decreases with a distance of the corresponding parts the permanent magnet system 460 can be configured to compensate forces originated from pneumatic pressure within the valve positioner with pneumatic output 100 acting on the valve 210 by providing a negative rate force-displacement relationship.

Figure 7a sketches schematically a 3/3 direction positioner valve 500 not according to the claimed invention, respectively a system of valve positioners with pneumatic output 500, including a twin on/off valve topology. The functionality of the 3/3 direction positioner valve 500 is schematically indicated by a de-aerate position 500a, a block position 500b and an aerate position 500c as indicated in figure 5a. Such a 3/3 direction positioner valve can include an inlet port 510, an outlet port 520 and a ventilation port 530 to provide the mentioned functionality.

Figure 7b sketches schematically a block diagram of the 3/3 direction positioner valve 500 not according to the claimed invention including a twin on/off valve topology, including two valve positioner with pneumatic output 542, 544, which are pneumatically coupled at an outlet side of the valve positioner with pneumatic output 542, 544, which is pneumatically coupled to the outlet port 520 of the system of valve positioners with pneumatic output 500. An inlet port of the first positioner 542 is pneumatically connected to the inlet 510 of the system of valve positioners with pneumatic output 500 and an inlet port of the second positioner 544 is pneumatically connected to a ventilation port 530 of the system of valve positioners with pneumatic output 500.

The following operation matrix indicate a position of the first positioner unit V1 542 and the second positioner unit V2 544 to provide the functionality as described above:

| | V1 | V2 |
|---|---|---|
| Aerate | 1 | 0 |
| De-aerate | 0 | 1 |
| Blocked | 0 | 0 |
| *"Flushing"* | 1 | 1 |

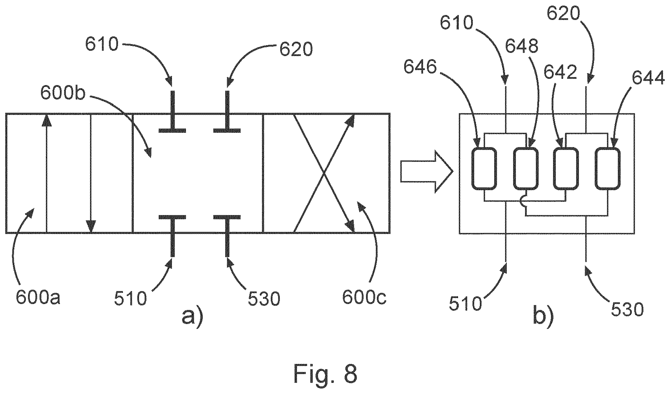

Figure 8a sketches schematically a 4/3 direction positioner valve 600 according to the claimed invention, respectively a system of valve positioners with pneumatic output 500, including a quattro on/off valve topology. The functionality of the 4/3 direction positioner valve 600 is schematically indicated by an open position 600a, a block position 600b and a closed position 600c as indicated in figure 6a. Such a 4/3 direction positioner valve 600 can include an inlet port 510, a first outlet port 610, a second outlet port 620 and a ventilation port 530 to provide the described functionality.

Figure 8b sketches schematically a block diagram of the 4/3 direction positioner valve 600 including a quattro on/off valve topology, having four valve positioners with pneumatic output 642, 644, 646, 648, wherein the first valve positioner with pneumatic output 642 and the second positioner 644 are pneumatically coupled at an outlet side of the first and the second valve positioner with pneumatic output 642, 644, which is pneumatically coupled to the second outlet port 620 of the system of valve positioner with pneumatic output 600. An inlet port of the first positioner 642 is pneumatically connected to the inlet port of a third valve positioner with pneumatic output 646, such that both are pneumatically connected to a first inlet port 510 of the valve positioner with pneumatic output 600. An inlet port of a second positioner unit 644 is pneumatically connected to an inlet port of a fourth valve positioner with pneumatic output unit 648, such that both are pneumatically connected to a second inlet port 530 of the system of valve positioner with pneumatic output 600.

The following operation matrix indicate a position of the first positioner unit V1 642, the second positioner unit V2 644, the third positioner unit V3 646 and the fourth positioner unit V4 648 to provide the functionality as described above:

| | V1 | V2 | V3 | V4 |
|---|---|---|---|---|
| OPEN | 1 | 0 | 0 | 1 |
| CLOSED | 0 | 1 | 1 | 0 |
| Blocked | 0 | 0 | 0 | 0 |
| | 1 | 1 | 1 | 1 |
| | 1 | 1 | 1 | 0 |
| | 1 | 1 | 0 | 0 |
| | 1 | 1 | 0 | 1 |
| | 1 | 0 | 0 | 0 |
| | 1 | 0 | 1 | 1 |
| | 1 | 0 | 1 | 0 |
| | 0 | 1 | 1 | 1 |
| | 0 | 0 | 0 | 1 |
| | 0 | 1 | 0 | 0 |
| | 0 | 1 | 0 | 1 |
| | 0 | 0 | 1 | 1 |
| | 0 | 0 | 1 | 1 |
| | 0 | 0 | 1 | 0 |

## Claims

1. A system of valve positioners with pneumatic output, comprising
a plurality of pneumatic positioners (100); and
a plurality of positioner drives (200), which are configured to control the plurality of pneumatic positioners (100) respectively,
wherein the plurality of pneumatic positioners (100) and the plurality of positioner drives (200), are configured to provide the functionality of a 4/3 positioner valve system,
wherein the plurality of positioner drives (200) comprises a membrane actuator (200a, 200b) respectively, wherein the membrane actuator is configured to be mechanically coupled to a valve (210) of the plurality of pneumatic positioners (100) respectively for controlling of the respective pneumatic positioner (100),
wherein the membrane actuator (200a, 200b) comprises a dielectric-elastomer membrane; and at least one electrical electrode adjacent to the dielectric-elastomer membrane to control the membrane actuator (200a, 200b) based on an electrical voltage provided to the electrical electrode, wherein the membrane actuator (200a, 200b) is configured to seal an inner pneumatic compartment (232, 234) of the pneumatic positioners (100) against an outer environment of the pneumatic positioners (100) in respect to a pneumatic fluid within the inner pneumatic compartment.

2. The system of valve positioners with pneumatic output according claim1, wherein the membrane actuator (200a, 200b) comprises:
a first electrical contact electrically coupled to the electrical electrode; and
a second electrical electrode with a second electrical contact; for provision of electrical voltages to operate the membrane actuator (200a, 200b).

3. The system of valve positioners with pneumatic output according to any of the previous claims, wherein the membrane actuator (200a, 200b) is configured to be arranged within a housing (230) of the pneumatic positioners (100).

4. The system of valve positioners with pneumatic output according to any of the previous claims, wherein the positioner drives (200) comprise a compensation element (400) respectively for compensation of forces originated from pneumatic pressure within the pneumatic positioners (100), wherein the compensation element (400) is configured to provide a negative rate force-displacement relationship.

5. The system of valve positioners with pneumatic output according to the previous claim, wherein the compensation element (400) comprises a system of compression springs (410, 420), which is configured to provide the negative rate force-displacement relationship and/or a convex disc spring (450), which is configured to provide the negative rate force-displacement relationship and/or a permanent magnet system (460), which is configured to provide the negative rate force-displacement relationship.

6. A use of a system of valve positioners with pneumatic output according to any one of claims 1 to 5 for controlling a process valve.

## Patentansprüche

1. Ein System von Ventilpositionierern mit pneumatischem Ausgang, umfassend
eine Vielzahl von pneumatischen Positionierern (100); und
eine Vielzahl von Positioniererantrieben (200), die so konfiguriert sind, dass sie die Vielzahl von pneumatischen Positionierern (100) jeweils steuern,
wobei die Vielzahl der pneumatischen Positionierer (100) und die Vielzahl von Positioniererantrieben (200) so konfiguriert sind, dass sie die Funktionalität eines 4/3-Positioniererventilsystems bereitstellen,
wobei die Vielzahl von Positioniererantrieben (200) jeweils einen Membranaktuator (200a, 200b) umfasst, wobei der Membranaktuator konfiguriert ist, mechanisch mit einem Ventil (210) der Vielzahl von pneumatischen Positionierern (100) gekoppelt zu werden, um den jeweiligen pneumatischen Positionierer (100) zu steuern,
wobei der Membranaktuator (200a, 200b) eine dielektrische Elastomermembran; und mindestens eine elektrische Elektrode angrenzend an die dielektrische Elastomermembran umfasst, um den Membranaktuator (200a, 200b) mittels einer an die elektrische Elektrode angelegten elektrischen Spannung zu steuern, wobei der Membranaktuator (200a, 200b) so konfiguriert ist, dass er eine innere pneumatische Kammer (232, 234) der pneumatischen Positionierer (100) gegenüber einer äußeren Umgebung der pneumatischen Positionierer (100) in Bezug auf ein pneumatisches Fluid in der inneren pneumatischen Kammer abdichtet.

2. Das System von Ventilpositionierern mit pneumatischem Ausgang gemäß Anspruch 1, wobei der Membranaktuator (200a, 200b) aufweist:
einen ersten elektrischen Kontakt, der elektrisch mit der elektrischen Elektrode gekoppelt ist; und
eine zweite elektrische Elektrode mit einem zweiten elektrischen Kontakt; zur Bereitstellung elektrischer Spannungen zum Betätigen des Membranaktuators (200a, 200b).

3. Das System von Ventilpositionierern mit pneumatischem Ausgang gemäß einem der vorherigen Ansprüche, wobei der Membranaktuator (200a, 200b) so konfiguriert ist, dass er in einem Gehäuse (230) der pneumatischen Positionierer (100) angeordnet werden kann.

4. Das System von Ventilpositionierern mit pneumatischem Ausgang gemäß einem der vorherigen Ansprüche, wobei die Positioniererantriebe (200) jeweils ein Kompensationselement (400) zur Kompensation von Kräften umfassen, die durch den pneumatischen Druck in den pneumatischen Positionierern (100) entstehen, wobei das Kompensationselement (400) so konfiguriert ist, dass es eine negative Kraft-Weg-Beziehung bereitstellt.

5. Ein System von Ventilpositionierern mit pneumatischem Ausgang gemäß dem vorherigen Anspruch, wobei das Kompensationselement (400) ein System von Druckfedern (410, 420), welches so konfiguriert ist, dass es die negative Kraft-Weg-Beziehung bereitstellt, und/oder eine konvexe Scheibenfeder (450), die so konfiguriert ist, dass sie die negative Kraft-Weg-Beziehung bereitstellt, und/oder ein Permanentmagnetsystem (460), das so konfiguriert ist, dass es die negative Kraft-Weg-Beziehung bereitstellt, aufweist.

6. Verwendung eines Systems von Ventilpositionierern mit pneumatischem Ausgang gemäß einem der Ansprüche 1 bis 5 zur Steuerung eines Prozessventils.

## Revendications

1. Système de positionneurs de vanne à sortie pneumatique, comprenant
une pluralité de positionneurs pneumatiques (100) ; et une pluralité de dispositifs d'entraînement de positionneur (200), qui sont configurés pour commander la pluralité de positionneurs pneumatiques (100) respectivement,
dans lequel la pluralité de positionneurs pneumatiques (100) et la pluralité de dispositifs d'entraînement de positionneur (200) sont configurés pour fournir la fonctionnalité d'un système de vanne à positionneur 4/3,
dans lequel la pluralité de dispositifs d'entraînement de positionneur (200) comprend un actionneur à membrane (200a, 200b) respectivement, dans lequel l'actionneur à membrane est configuré pour être couplé mécaniquement à une vanne (210) de la pluralité de positionneurs pneumatiques (100) respectivement pour commander le positionneur pneumatique (100) respectif,
dans lequel l'actionneur à membrane (200a, 200b) comprend une membrane d'élastomère diélectrique ; et au moins une électrode électrique adjacente à la membrane d'élastomère diélectrique pour commander l'actionneur à membrane (200a, 200b) sur la base d'une tension électrique fournie à l'électrode électrique, dans lequel l'actionneur à membrane (200a, 200b) est configuré pour rendre étanche un compartiment pneumatique interne (232, 234) des positionneurs pneumatiques (100) contre un environnement externe des positionneurs pneumatiques (100) par rapport à un fluide pneumatique à l'intérieur du compartiment pneumatique interne.

2. Système de positionneurs de vanne à sortie pneumatique selon la revendication 1, dans lequel l'actionneur à membrane (200a, 200b) comprend :
un premier contact électrique couplé électriquement à l'électrode électrique ; et
une seconde électrode électrique avec un second contact électrique ; pour la fourniture de tensions électriques pour faire fonctionner l'actionneur à membrane (200a, 200b) .

3. Système de positionneurs de vanne à sortie pneumatique selon l'une quelconque des revendications précédentes, dans lequel l'actionneur à membrane (200a, 200b) est configuré pour être agencé à l'intérieur d'un boîtier (230) des positionneurs pneumatiques (100).

4. Système de positionneurs de vanne à sortie pneumatique selon l'une quelconque des revendications précédentes, dans lequel les dispositifs d'entraînement de positionneur (200) comprennent un élément de compensation (400) respectivement pour la compensation de forces dues à une pression pneumatique à l'intérieur des positionneurs pneumatiques (100), dans lequel l'élément de compensation (400) est configuré pour fournir une relation force-déplacement à taux négatif.

5. Système de positionneurs de vanne à sortie pneumatique selon la revendication précédente, dans lequel l'élément de compensation (400) comprend un système de ressorts de compression (410, 420), qui est configuré pour fournir la relation force-déplacement à taux négatif et/ou un ressort à disque convexe (450), qui est configuré pour fournir la relation force-déplacement à taux négatif et/ou un système d'aimant permanent (460), qui est configuré pour fournir la relation force-déplacement à taux négatif.

6. Utilisation d'un système de positionneurs de vanne à sortie pneumatique selon l'une quelconque des revendications 1 à 5 pour commander une vanne de procédé.
